# EUROPÄISCHE PATENTSCHRIFT

(11) **EP 1 133 753 B1**
(45) Veröffentlichungstag und Bekanntmachung des Hinweises auf die Patenterteilung: **11.02.2004**
(21) Anmeldenummer: 99962066.9
(22) Anmeldetag: 19.11.1999
(51) Int. Cl.: G06K 11/18, G06F 3/033

(54) **VORRICHTUNG UND VERFAHREN ZUM AUFZEICHNEN VON DATEN, DIE EINER GESCHRIEBENEN ODER GEZEICHNETEN INFORMATION ENTSPRECHEN**
DEVICE FOR RECORDING DATA CORRESPONDING TO WRITTEN OR RECORDED INFORMATION
DISPOSITIF PERMETTANT D'ENREGISTRER DES DONNEES BIDIMENSIONNELLES CORRESPONDANT A DES INFORMATIONS ECRITES OU DESSINEES

(30) Priorität: 19.11.1998 DE 19853505
(43) Veröffentlichungstag der Anmeldung: 19.09.2001
(73) Patentinhaber: Gens, Daniel, 65344 Bad Schwalbach (DE)
(72) Erfinder: Gens, Daniel, 65344 Bad Schwalbach (DE)
(74) Vertreter: Herden, Andreas F.
(86) Internationale Anmeldenummer: PCT/DE1999/003699
(87) Internationale Veröffentlichungsnummer: WO 2000/031682

(56) Entgegenhaltungen:
- WO-A-95/21436
- US-A- 5 248 855
- US-A- 5 629 499
- PATENT ABSTRACTS OF JAPAN vol. 1997, no. 11, 28. November 1997 (1997-11-28) & JP 09 190281 A (RICOH CO LTD), 22. Juli 1997 (1997-07-22)
- PATENT ABSTRACTS OF JAPAN vol. 018, no. 309 (P-1753), 13. Juni 1994 (1994-06-13) & JP 06 067799 A (SEIKO INSTR INC), 11. März 1994 (1994-03-11)

## Beschreibung

Die Erfindung betrifft eine Vorrichtung gemäß den Ansprüchen 1 und 17 und sowie ein Verfahren nach Anspruch 28.

Schriftliche Informationen, d. h. etwa Schriftstücke, Notizen, Zeichnungen und Bilder, sind in verschiedenster Form darstellbar. Eine sehr gewöhnliche Form ist die Benutzung eines Stiftes als Schreibgerät und eines Blattes Papier als Schreibunterlage. Hierbei erhält man als Abbildung eine direkte Wiedergabe auf dem Blatt Papier, etwa durch Tinte oder Kugelschreiberpaste.

In neuerer Zeit sind sogenannte Note-Pads auf den Markt gekommen. Diese fungieren als mobiles, elektronisches Notizbuch. Hierbei wird im wesentlichen durch Einsatz der LCD-Technik ein Stift über eine glatte Oberfläche geführt. Eine Berührung der glatten Oberfläche wird elektronisch registriert und es wird ein Abbild der Bewegungen des Schreibgerätes über die glatte Oberfläche erzeugt. Dieses Abbild wird ausgewertet, einem Schrifterkennungsverfahren unterzogen und anschließend auf einem zugeordneten Bildschirm angezeigt.

Das mit dem Schreibgerät auf der glatten Oberfläche erzeugte Abbild steht ausschließlich in Form von zweidimensionalen Daten zur Verfügung. Das Schreiben auf gewöhnlichem Papier unter gleichzeitiger Aufzeichnung der geschriebenen zweidimensionalen Daten in Form von Signalen ist bei den Note-Pads ausgeschlossen. Note-Pads stellen auch nicht die Möglichkeit bereit, das Geschriebene auf der zu beschreibenden Oberfläche unmittelbar abzulesen, sondern der niedergeschriebene Text wird auf einem Display dargestellt. Derartige Note-Pads erfordern allerdings eine ständige Stromversorgung.

Daneben sind auch Vorrichtungen bekannt, die der Verifizierung einer Unterschrift dienen. So schützt das europäische Patent EP 0 276 109 B1 eine Vorrichtung und ein Verfahren zur Aufnahme von Zeichnungen und geschriebenem Text.

Sowohl die Position eines dabei verwendeten Schreibstiftes auf einer Schreibunterlage als auch ein geschriebener Text werden durch Messung einer Intensität von reflektierter oder transmittierter optischer Strahlung bestimmt. Ein Text kann als Intensitätssignal gespeichert werden. Weichen die Lichtverhältnisse bei der Vornahme einer Unterschrift von denjenigen ab, bei welchen die Referenzunterschrift vorgenommen wurde, so ist die Verifizierung nicht mehr sicher durchführbar.

Aus der Schrift WO 99/22338 ist ein elektronischer Schreibstift bekannt, der mit Hilfe von Beschleunigungssensoren die bei einem Schreibvorgang gemachten Bewegungen in ein elektrisches Signal umwandelt. Dieses elektrische, auf einem Display darstellbare oder speicherbare Signal stellt den geschriebenen Text dar.

Eine weitere schreibstiftartige Vorrichtung zur Aufnahme von Figuren oder geschriebenem Text zur Weiterleitung in ein Datenverarbeitungssystem ist in dem US-Patent 5,902,968 offenbart. Drei Beschleunigungssensoren detektieren die Bewegung der Vorrichtung beim Schreiben eines Textes in drei Raumrichtungen. Drei Gyroskope nehmen dabei Winkelgeschwindigkeiten um die drei Raumachsen auf. über eine numerische Einheit wird die Neigung der Vorrichtung beim Start eines Schreibvorganges berechnet. Mit der Neigung des Stiftes wird die bezüglich des Stift-Koordinatensystems aufgenommene Beschleunigung in das im wesentlichen durch Schwerkraft gegebene Koordinatensystem, in dem sich eine Schreibunterlage befindet, übertragen.

Die Verwendung von drei Gyroskopen bedingt dabei eine nachteilige Größe.

Das Dokument US-A-5,629,499 bildet die Basis für die Oberbegriffe der unabhängigen Ansprüche 1 und 17 und offenbart eine Vorrichtung mit einem Stift und einer Schreibunterlage. Mit dem Stift werden Symbole auf ein Formular in Form eines Blattes Papier aufgebracht, das auf einer elektronischen Unterlage liegt. Dabei werden die Symbole in der Schreibunterlage durch einen Mechanismus erfaßt und in einer Speichereinrichtung gespeichert, so daß sie später vom Benutzer über eine Schnittstelle an andere elektronische Einrichtungen übertragen werden können. Die andere elektronische Einrichtung empfängt beispielsweise die Nummer des Formulars und die geschriebene Information, die dann ungefähr an den entsprechenden Stellen, an denen die Information eingetragen wurde, wieder angezeigt werden kann.

In Dokument WO-A-95 21436 wird eine Vorrichtung zur Eingabe von Information beschrieben. Die Vorrichtung enthält einen Apparat zum Aufzeichnen von rotatorischen und translatorischen Bewegungen insbesondere eines Stiftes. Diese Bewegungen können über weitere Einrichtungen in eine Bewegung eines vorgewählten Objektes oder des Cursors auf dem Bildschirm eines angeschlossenen Computers umgesetzt werden.

Das Fehlen einer Überprüfung der absoluten Stiftposition während des Schreibvorganges bei den Gegenständen der genannten Dokumente ist besonders nachteilig.

Der Erfindung liegt daher die Aufgabe zugrunde, eine Vorrichtung zum Aufbringen einer Information auf eine Schreibunterlage bzw. Zeichnungsunterlage und gleichzeitigem Aufnehmen dieser Information als Datensatz bereitzustellen, die in der Lage ist, die Position eines Schreibstiftes auf der Schreib- bzw. Zeichnungsunterlage während des Schreibvorganges genau zu kennen.

Zur Lösung dienen die Merkmale der Ansprüche 1, 17 und 28.

Die Erfindung bringt den Vorteil mit sich, dass die Informationen sowohl in analoger Form auf der Schreibunterlage als auch als speicherbarer Datensatz vorliegen. Ein besonderer Vorteil der Erfindung liegt darin, dass ein Aufzeichnen der Information auf der Schreibunterlage unterbrochen werden kann, ohne dass der Datensatz dadurch unbrauchbar wird. Ein weiterer Vorteil liegt darin, dass die erfindungsgemäße Vorrichtung bzw. das erfindungsgemäße Verfahren mit einer elektrisch passiven Schreibunterlage arbeitet. dass ein Aufzeichnen der Information auf der Schreibunterlage unterbrochen werden kann, ohne dass der Datensatz dadurch unbrauchbar wird. Ein weiterer Vorteil liegt darin, dass die erfindungsgemäße Vorrichtung bzw. das erfindungsgemäße Verfahren mit einer elektrisch passiven Schreibunterlage arbeitet.

Erfindungsgemäß wird sichergestellt, dass relative Positionen, die aus der Bewegung des Schreibgerätes gewonnen werden, in diskreten zeitlichen und/oder räumlichen Abständen durch eine Bestimmung der absoluten Position des Schreibgerätes bzgl. der Schreibunterlage korrigiert werden. Es wird somit erfindungsgemäß ein dem Schreibgerät zugeordnetes Koordinatensystem dem Koordinatensystem der Schreibunterlage aufeinander abgeglichen. Die gemessene Beschleunigung des Schreibgerätes ist relativ zur Erdanziehung eindeutig bestimmt. Erfindungsgemäß werden jeweils drei translatorische und drei rotatorische Bewegungen ermittelt.

Eine Bestimmung der relativen.Positionen erfolgt in kürzeren Zeitabständen als die Bestimmung der absoluten Positionen. Dabei bestimmen die ersten Mittel die relativen Positionen aus dem dreidimensionalen Bewegungsverlauf des Schreibgerätes und die zweiten Mittel sind als Markierung auf der Schreibunterlage und als eine dazugehörige Ausleseeinheit im Schreibgerät ausgebildet. Die relativen Positionen werden jeweils bei Vorliegen von absoluten Positionen abgeglichen.

Vorteilhafte Weiterbildungen sind in den Unteransprüchen angegeben.

Die Schreibunterlage kann vorteilhafterweise codiert werden, etwa durch eine auf das Papier aufgebrachte Kennung. Dabei kann die Kennung in Form eines Bar-Codes, vorzugsweise in Form eines optisch lesbaren Bar-Codes oder als eine magnetisierte Schicht ausgeführt sein. Hierdurch läßt sich in rechnerfreundlicher Darstellungsform die Lage des Schreibgerätes an der Schreibunterlage feststellen. Auf diese Weise können besonders einfach weitere Daten vom Schreibgerät aufgenommen werden.

In einer Ausführungsform der Erfindung umfasst die Schreibunterlage eine magnetische Schicht. Verschiedene Punkte auf der Schreibunterlage weisen verschiedene Magnetisierungsgrade und dadurch verschiedene magnetische Feldstärken auf. Hierdurch wird eine einfache und kostengünstige Lösung für die Erkennung verschiedener Punkte auf der Schreibunterlage vorgeschlagen.

Ferner kann die Schreibunterlage durch unterschiedlich stark magnetisierte Felder eine lineare oder nichtlineare magnetische Rasterung aufweisen. Die Schreibunterlage wird somit in verschiedene Bereiche aufgeteilt. Die magnetische Rasterung realisiert, dass erfasst wird, in welchem Bereich der Schreibunterlage gerade geschrieben wird. Die Rasterung kann durch magnetisierende Linien erfolgen, die die Felder voneinander trennen. Wird nun das Schreibgerät über einen spezifisch magnetisierten Berecih geführt, so wird durch die Induktionswirkung auf die Spule registriert, wenn ein Feld überschritten wird.

Zum Erzeugen einer gewöhnlichen Abbildung auf der Schreibunterlage wird ein Stoff auf die Schreibunterlage aufgebracht, der dauerhaft auf der Schreibunterlage haften bleibt oder mehr oder weniger in die Schreibunterlage eindringt. D. h., das erfindungsgemäße Schreibgerät weist eine gewöhnliche Schreibmine auf, die einen Stoff auf die Schreibunterlage abgibt.

In einer weiteren erfindungsgemäßen Ausführungsform wird gewöhnliches Papier als Schreibunterlage verwendet. Bei Vorliegen von a priori-Kenntnissen kann auf eine absolute Positionsbestimmung verzichtet werden, wodurch der Einsatz gewöhnlichen Papiers ermöglicht wird. Hierdurch werden insbesondere Kostenvorteile erreicht.

Eine andere Ausführungsform stellt die Schreibunterlage mit wenigstens einer optisch detektierbaren Schicht bereit, die vom optoelektronischen Empfänger am Schreibgerät detektiert wird und verschiedenartige Informationen enthalten kann. Vorzugsweise weist die optisch detektierbare Schicht einen örtlich variierenden Verlauf etwa in Form unterschiedlicher Farben auf.

Desweiteren kann die Erfindung eine Sendeeinrichtung umfassen, so dass die Daten, die aus der Abbildung auf der Schreibunterlage gewonnen wurden, unmittelbar oder nach Zwischenspeicherung an weitere Einrichtungen übertragen werden können. Entsprechend ist eine Empfangseinrichtung vorgesehen. Diese Empfangseinrichtung kann in verschiedenster Ausbildung auftreten und es kann jede beliebige Distanz zwischen der Sendeeinrichtung am Schreibgerät und der Empfangseinrichtung bestehen.

Ebenso können die übermittelten Daten auf Seiten der Empfangseinrichtung gespeichert werden. Die aufgezeichneten Daten lassen sich somit ohne weitere Arbeitsschritte und quasi ohne zeitliche Verzögerungen in Rechenanlagen weiterverarbeiten und in bestehende Datenbanken einfügen.

Ferner können in weiteren erfindungsgemäßen Ausführungsformen neben den vorstehend beschriebenen zweidimensionalen Daten auf der Schreibunterlage weitere Daten, der Druck, die Neigung, die Geschwindigkeit und die Beschleunigung, mit denen das Schreibgerät während des Schreibvorganges über die Schreibunterlage geführt wird, aufgezeichnet werden. Besonders kostengünstig und einfach können diese Daten mit einer Sensoreinrichtung, einer Rollkugel an der Spitze des Schreibgerätes und einem Piezowandler im Schreibgerät realisiert werden. Diese Daten lassen durch Vergleich mit entsprechenden bestehenden Daten eine sichere Erkennung des Nutzers des Schreibgerätes zu.

Am Schreibgerät läßt sich eine Empfangseinrichtung anbringen. Im Wesentlichen dient diese Empfangseinrichtung zum Empfangen von Daten als Reaktion auf die vom Schreibgerät gesendeten Daten, wodurch ein bidirektionales Kommunikationssystem geschaffen wird.

Um die aufgezeichneten Daten vorteilhafterweise weiterverarbeiten zu können und nutzbar zu machen, können Schnittstellen zu Computereinrichtungen und Datenbanken bereitgestellt werden.

Eine besondere Ausführungsform für eine von statischen Rechenanlagen unabhängige Speicherung kann neben der Speicherung im Schreibgerät selbst in vielen denkbaren tragbaren Einrichtungen stattfinden, nachdem eine Übertragung der Daten zu der jeweiligen Einrichtung stattgefunden hat. Die aufgezeichneten zweidimensionalen Daten können folglich bei mobiler Verwendung etwa in Speichern einer Uhr oder eines Mobilfunkgerätes gespeichert werden, wodurch die erfindungsgemäße Vorrichtung sehr viel flexibler einsetzbar wird.

Aus Sicherheitsgründen kann einem Benutzer des Schreibgeräts oder dem Schreibgerät selbst eine Identifikationsnummer und/oder ein Paßwort zugewiesen werden. So kann etwa ein Schreibvorgang als nicht berechtigt erkannt werden, falls die Identifikationsnummer und/oder das Paßwort nicht fehlerfrei eingegeben wurden, wobei das Eingeben manuell am Schreibgerät erfolgen kann oder auch niedergeschrieben und durch die erfindungsgemäße Aufzeichnung aufgenommen und überprüft wird.

Zweckmäßigerweise kann eine Signalisierungseinrichtung am Schreibgerät angebracht sein, die eine Rückmeldung für verschiedene Benutzungsfälle liefert. Die Signalisierungseinrichtung wird im Wesentlichen nach Verarbeitung der Daten in der Rechenanlage, bei der etwaige Fehler erkannt werden können, und darauffolgender Übertragung der Fehlermeldung an das Schreibgerät angesteuert.

In besonders vorteilhafter Weise kann das Schreibgerät einen Zwischenspeicher für die aufgezeichneten Daten umfassen. Somit können auch Daten weiterverwendet werden, die nicht unmittelbar an die Sendeeinrichtung übermittelt werden.

Die Erfindung wird nachfolgend anhand von zwei Ausführungsbeispielen in Verbindung mit den begleitenden Zeichnungen näher erläutert.

Es zeigen:
- Fig. 1: ein magnetisch gerastertes Papier mit dem erfindungsgemäßen Schreibgerät und einer Empfangseinrichtung;
- Fig. 2: eine schematische Darstellung einer zweiten Ausführungsform eines erfindungsgemäßen Schreibgerätes in teilweise aufgebrochener Darstellung.

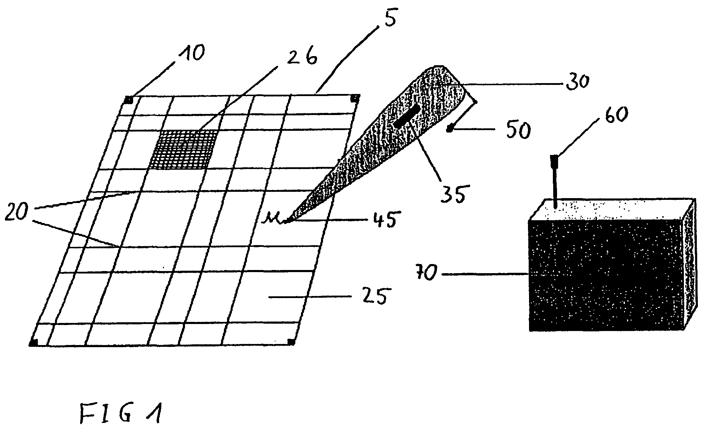

Figur 1 zeigt ein Spezialpapier 10, das bei seinem Herstellungsprozeß mit magnetisierendem Material versehen wurde. In diesem speziellen Fall wird das Papier in verschiedene Bereiche eingeteilt, die unterschiedliche Magnetisierungsgrade und somit ein jeweils zu definierendes magnetisches Feld aufweisen. Die verschiedenen Bereiche bilden vorzugsweise eine nichtlineare Rasterung 20. Die magnetischen Felder 25 können weiterhin zu Feldern und Schrift korrespondieren, die auf gewöhnliche Weise auf das magnetische Papier gedruckt werden. Auf diese Weise wird, etwa im Formularwesen, ein drucktechnisch gewöhnliches Formular den Feldern 25 verschiedener magnetischer Feldstärke zugeordnet.

Die Felder 25 können etwa anzukreuzende oder zu markierende Kästchen oder Felder, in denen Schriftdaten, wie etwa Name und Wohnort einzutragen sind, sein. Das derart bereitgestellte Formular 5 wird mit dem erfindungsgemäßen Schreibgerät 30 ausgefüllt, das über eine gewöhnliche Schreibvorrichtung 45 verfügt, etwa eine Kugelschreibermine oder eine Grafitmine eines Bleistiftes. Das Formular 5 steht somit ohne weitere Hilfsmittel lesbar zur Verfügung, es ist gewöhnlich auswertbar und archivierbar.

Darüber hinaus werden die mit dem Schreibgerät 30 geschriebenen Daten wie nachfolgend beschrieben aufgezeichnet. Eine Einrichtung am Schreibgerät registriert, über welchem magnetischen Feld 25 sich das Schreibgerät zu einem bestimmten Zeitpunkt befindet. Dazu umfasst die Einrichtung eine Spule (nicht dargestellt), die über Induktionswirkung die magnetische Feldstärke der einzelnen Felder 25 erfasst. Wird etwa ein bestimmtes Feld 25 angekreuzt, so wird das betreffende Feld eindeutig registriert. Indem ein einfaches Piezoelement (nicht dargestellt) einen gewissen Druck der Schreibmine auf die Schreibunterlage aufnimmt und eine elektrische Spannung liefert, steht in Abstimmung mit der durch die magnetische Feldstärke des betreffenden Feldes in der Spule (nicht dargestellt) induzierten Spannung ein Signal zur Verfügung, das eindeutig auf das betreffende angekreuzte Feld schließen läßt.

Das von der Spule erzeugte Signal wird der Speichereinrichtung im Schreibgerät 30 zugeführt. In der Speichereinrichtung liegt demnach die Information vor, welche Felder angekreuzt wurden bzw. daraus folgend, welche Felder nicht angekreuzt wurden. Weiterhin lassen sich die Felder noch sehr viel feiner rastern. In der gleichen Weise wie vorstehend beschrieben wird bei der feineren, pixelartigen Rasterung 26 nicht nur aufgezeichnet, ob ein Feld angekreuzt oder markiert wird, sondern es läßt sich aus der feineren, pixelartigen Rasterung 26 der einzelnen Felder 25 die Schreibspur aufzeichnen, die etwa einem in Blockbuchstaben oder Schreibschrift geschriebenen Text entspricht. In der Speichereinrichtung der Schreibeinrichtung 30 wird demnach die Information des geschriebenen Textes, und die Information, in welches Feld des Formulares 5 der Text geschrieben wurde, abgespeichert.

Hierdurch wird es erstmalig möglich, einen geschriebenen Text auf der beschriebenen Schreibunterlage 10 auf gewöhnliche Weise abzulesen und außerdem ohne Zwischenschaltung weiterer Einrichtungen in Form von Daten bereitzustellen.

Die erzeugten Daten des Schreibvorganges werden vom Zwischenspeicher über die Sendeeinrichtung 50 am Schreibgerät terrestrisch an die Antenne 60 einer Empfangseinrichtung 70 übermittelt. Zweckmäßigerweise können die im Allgemeinen analog aufgezeichneten Daten einer A/D-Wandlung unterzogen werden, um die Vorteile der digitalen Übertragung nutzen zu können und an weiterverarbeitende digitale Systeme anzupassen.

Die Empfangseinrichtung 70 umfasst eine Rechenanlage mit verbundener Datenbank. Die empfangenen Daten werden hierin weiterverarbeitet. Anhand der Information über das verwendete Formular 5 und die angekreuzten oder markierten Felder werden die übermittelten Daten weiterverarbeitet. In der Empfangseinrichtung liegen die auf die Schreibunterlage niedergeschriebenen Daten folglich in Echtzeit vor, weitere Arbeitsschritte, wie etwa ein Einscannen des ausgefüllten Formulares 5 entfallen bei der Erfindung vollständig. Insbesondere werden die Daten, die sich aus der aufgezeichneten Schreibspur auf der feineren, pixelartigen Rasterung 26 ableiten, einer Schrifterkennung unterzogen, indem ein intelligentes Leseverfahren auf die Daten angewandt wird. Das intelligente Leseverfahren ist in diesem Fall in der Rechenanlage implementiert. Hierdurch läßt sich mit geeigneter Software oder auch durch fest verdrahtete Logik der geschriebene Text, in Blockbuchstaben oder sogar in Schreibschrift, mit hoher Erkennungsrate deuten.

Der gesamte Inhalt des Formulares 5, das heißt der Inhalt des Formularvordruckes mit den zugeordneten niedergeschriebenen Daten ist somit im Speicher der Rechenanlage, die der Empfangseinrichtung 70 zugeordnet ist, verfügbar. Ist etwa das Feld im Formularvordruck mit "Name" gekennzeichnet, so wird der in dieses Feld niedergeschriebene Name in der Rechenanlage diesem Feld eindeutig zugeordnet. Die aufgezeichneten Daten können naheliegender Weise mit in der Datenbank vorhandenen Daten automatisch verglichen werden und es kann gegebenenfalls eine automatische Aktualisierung der Daten stattfinden.

Ferner kann in weiteren Arbeitsschritten ein Signal von der Empfangseinrichtung 70 an die Sendeeinrichtung 50 des Schreibgerätes übermittelt werden, wenn das Formular offenbar falsch ausgefüllt wurde, etwa im Feld "Name" eine Zahl eingeschrieben wurde oder ein unbedingt auszufüllendes Feld nach Abschluß des Schreibvorganges leer bleibt. Dieses Signal wird an der Signalisierungseinrichtung 35 des Schreibgerätes angezeigt.

Bei der Ausführungsform nach Fig. 1 werden vom Schreibgerät 30 neben den vorstehend beschriebenen Daten weitere physikalische Größen aufgezeichnet. Registriert das Schreibgerät 30 etwa, dass in das Formularfeld "Unterschrift" geschrieben wird, so kann eine Sensoreinrichtung (nicht dargestellt) am Schreibgerät 30 aktiviert werden, die die Größen Geschwindigkeit, Beschleunigung, Druck und Neigung der Schreibmine auf eine beliebige Schreibunterlage aufzeichnet. Die Größen Geschwindigkeit und Beschleunigung werden vorzugsweise durch Messungen an der Oberfläche einer Rollkugel an der Spitze der Schreibmine ermittelt. Mit Hilfe eines mikromechanischen Bauteiles läßt sich die Neigung des Schreibgerätes 30 während der Unterschrift ermitteln. Das vorstehend beschriebene Piezoelement dient während der Unterschrift nicht nur zum Erzeugen eines Signales mit dem binären Wert, ob der Nutzer über die Schreibmine Druck auf die Schreibunterlage 10 ausübt oder nicht, sondern der Druck und die Druckdifferenz werden empfindlich über die im Piezowandler gewandelte Spannung gemessen und aufgezeichnet.

Diese aufgezeichneten Größen der spezifischen Unterschrift bilden, zumal in Kombination miteinander, ein einmaliges Charakteristikum der niedergeschriebenen Unterschrift. Die charakteristischen Daten werden an die Empfangseinrichtung 70 übermittelt und weiter in der Rechenanlage mit den Daten, die entsprechend aus einer Referenzunterschrift des betreffenden Unterzeichners ermittelt wurden, verglichen. Auf diese Weise kann die Unterschrift verifiziert werden. Die Verifizierung erfolgt in einem gewissen Toleranzbereichen, die sich im Wesentlichen aus der Empfindlichkeit der verwendeten Meßeinrichtungen ergeben.

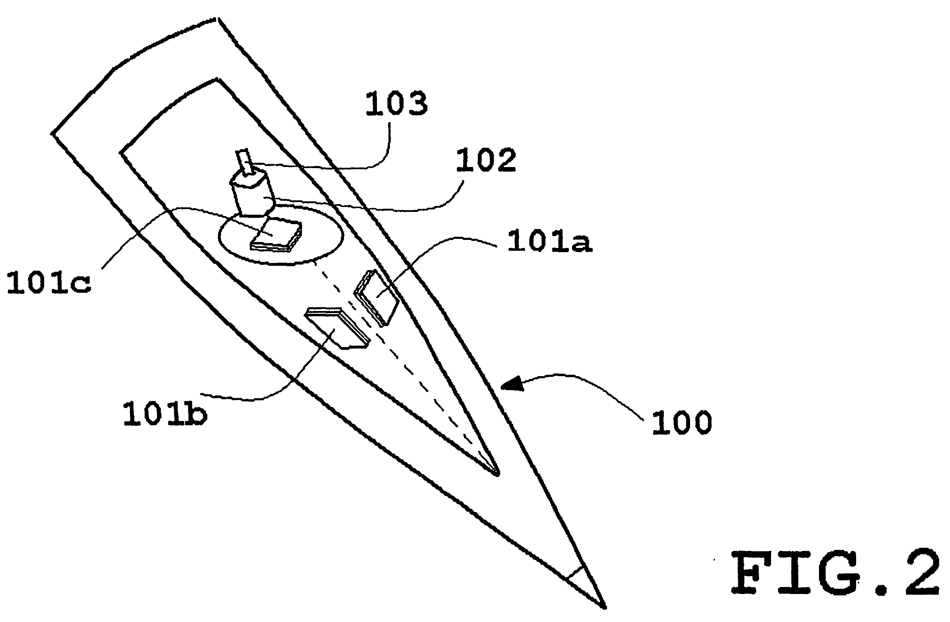

Nach Fig. 2 enthält eine besonders bevorzugte Ausführungsform der Erfindung ein Schreibgerät 100 mit drei Beschleunigungssensoren 101a-101c, einem Neigungssensor 102 und einem Gyroskop 103. Erfindungsgemäß wird mit den Beschleunigungssensoren 101a-101c die bei dem Erzeugen einer Schrift und/oder einer Zeichnung auf der Schreibunterlage erfolgende Beschleunigung des Schreibgerätes aufgezeichnet. Der Neigungssensor 102 ist vorzugsweise als zweidimensionaler Neigungssensor 102 ausgebildet, der die Neigung des Schreibgerätes 100 absolut mißt. Dabei wird ein vom Schreibgerät 100 bezüglich zweier Achsen gebildeter Winkel gemessen. Das Gyroskop 103 dient der Bestimmung einer bei dem Schreibvorgang möglicherweise auftretenden Verdrehung des Schreibgerätes bezüglich dessen Längsachse. Vorzugsweise enthält das Gyroskop 103 auf dem piezoelektrischen Effekt basierende Sensoren.

Erfindungsgemäß wird ein Neigungssensor 102 benutzt, der eine Elektrolytflüssigkeit enthält und grob vereinfacht auf dem Prinzip einer Wasserwaage einen Neigungswinkel mißt. Die Verdrehung des Schreibgerätes bezüglich seiner Längsachse wird erfindungsgemäß über eine Bestimmung der Winkelgeschwindigkeit ermittelt. Die Winkelgeschwindigkeit wird mit einem Gyroskop 103 bestimmt, und daraus über eine Integration nach der Zeit der Drehwinkel bestimmt. Erfindungsgemäß wird ein Gyroskop 103 verwendet, das eine minimale Verdrehung beim Schreibvorgang aufnehmen kann. Es muß eine Verdrehung nachgewiesen werden können, die während eines Schreibvorgangs eines einzelnen Wortes oder von Wortteilen durch eine Verdrehung bzw. Verkürzung der das Schreibgerät umfassenden Finger einer ansonsten fest positionierten Hand einer schreibenden Person aufnimmt.

Die mit den Beschleunigungssensoren 101a-101c aufgenommene Beschleunigung wird zweifach nach der Zeit integriert und daraus die bei der Aufzeichnung einer Schrift und/oder einer Zeichnung zurückgelegte Wegstrecke auf der Schreibunterlage bestimmt. Um den Schriftzug nachvollziehen zu können, wird ausgehend von der aus der zweifachen zeitlichen Integration der Beschleunigung aufgezeichneten Wegstrecke ausgegangen, wobei die gemessene Neigung des Schreibgerätes 100 sowie eine Verdrehung des Schreibgerätes um seine Längsachse einbezogen wird. Zusätzlich wird eine Bestimmung der Position des Schreibgerätes 100 absolut zur Schreibunterlage bestimmt. Die erfindungsgemäße Kombination einer relativen Positionsbestimmung mit einer absoluten Positionsbestimmung des Schreibgerätes 100 auf der Schreibunterlage erfolgt zeitlich fortlaufend. Dabei wird die relative Positionsbestimmung vorzugsweise mit einer Frequenz von 300 Hz abgefragt, wohingegen die Positionserkennung zur Bestimmung der absoluten Position, etwa über das optische Auslesen eines auf dem Papier angebrachten Bar-Codes mit einer deutlich geringeren Frequenz, vorzugsweise etwa 10 Hz durchgeführt wird. Erfindungsgemäß wird dadurch erreicht, dass zwischen den absoluten Positionserkennungen die relative Positionserkennung innerhalb von tolerierbaren Fehlergrenzen gehalten wird. Dabei wird vorzugsweise die Anforderung erfüllt, dass die aus einer zeitlichen Integration der Beschleunigung über einen Zeitraum von 2 Sekunden gewonnene zwischen zwei absoluten Positionserkennungen relative Position des Schreibgerätes um einen Wert von etwa kleiner gleich 0,5 mm von dem wahren Verlauf des Schriftzuges abweichen kann.

Erfindungsgemäß erfolgt die Bestimmung der Position des Schreibgerätes bzgl. der Schreibunterlage vorzugsweise über eine gleichmäßige Flächencodierung. Dabei enthält jedes Codierungselement je eine Bitfolge für eine x-Koordinate, eine y-Koordinate sowie zusätzlich eine Bitfolge, welche die Kennung für ein bestimmtes Formularblatt und ggf. eine Seitennummer davon angibt.

Die Erfindung ist nicht auf die beschriebenen Ausführungsbeispiele beschränkt, die in vielfacher Art und Weise abgewandelt werden können. So versteht es sich, dass im Rahmen der vorliegenden Erfindung die Messung der relativen Position, die während des Schreibvorganges erfolgt, auch anders als mit den oben beschriebenen Einrichtungen durchgeführt werden kann. So ist es denkbar, über eine optische Auswertung der Unterlage, wie es etwa bei Computer-Maus-Systemen möglich ist, zu bestimmen. Auch kann zur relativen Positionsbestimmung eine Rollkugel verwendet werden. Es versteht sich desweiteren, dass die genannten Bauteile auch durch mikromechanische Bauteile, soweit sie wenigstens über die gleiche Leistung und Genauigkeit verfügen, ersetzt werden können und diese im Rahmen der Erfindung inbegriffen sind.

Schließlich und endlich versteht sich, dass die einzelnen Merkmale der Erfindung auch in anderen als den dargestellten und beschriebenen Kombinationen verwendet werden können.

## Patentansprüche

1. Vorrichtung mit einem Schreibgerät (30, 100) und einer Schreibunterlage (10) zum Aufzeichnen eines Datensatzes, welcher einer mit dem Schreibgerät (30, 100) auf die Schreibunterlage (10) aufgetragenen Information, insbesondere geschriebener Text und/oder eine Zeichnung, entsprechende Daten und der Information zugehörige Positionen auf der Schreibunterlage (10) und eine weitere der Schreibunterlage (10) zugeordnete kennung enthält, wobei das Aufzeichnen durch die Erzeugung der Information aktivierbar ist, welche **dadurch gekennzeichnet ist, dass** die Bestimmung der Position des Schreibgerätes bezüglich der Schreibunterlage über eine Flächencodierung erfolgt.

2. Vorrichtung nach Anspruch 1, **dadurch gekennzeichnet, dass** die Vorrichtung erste Mittel (101a - 101c, 102, 103) zur fortlaufenden Bestimmung der Position des Schreibgerätes (30, 100) auf der Schreibunterlage (10) relativ zu einer Startposition für das Auftragen der Information und zweite Mittel (20, 25, 26) zur fortlaufenden absoluten Bestimmung der Position des Schreibgerätes (30, 100) auf der Schreibunterlage (10) enthält.

3. Vorrichtung nach Anspruch 2, **dadurch gekennzeichnet, dass** die Bestimmung der relativen Positionen in kürzeren Zeitabständen als die Bestimmung der absoluten Positionen erfolgt und dass die ersten Mittel (101a - 101c, 102, 103) die relativen Positionen aus dem dreidimensionalen Bewegungsverlauf des Schreibgerätes (30, 100) bestimmen und die zweiten Mittel (20, 25, 26) als Markierung auf der Schreibunterlage (10) und einer dazugehörigen Ausleseeinheit im Schreibgerät (30, 100) ausgebildet sind, wobei die relativen Positionen bei Vorliegen von absoluten Positionen damit abgeglichen werden.

4. Vorrichtung nach einem der Ansprüche 1 bis 3, **dadurch gekennzeichnet, dass** die ersten Mittel drei Beschleunigungssensoren (101a - 101c), welche drei zueinander orthogonalen Raumrichtungen zugeordnet sind, einen zweidimensional arbeitenden Neigungssensor (102) und wenigstens ein Gyroskop (103) aufweisen und dass die zweiten Mittel (20, 25, 26) als ein gleichmäßig auf der Schreibunterlage (10) angebrachtes barcodeähnliches System mit Ortsangaben in zwei zueinander orthogonalen Richtungen und ein zugehöriger optoelektronischer Sensor im Schreibgerät (30, 100) ausgebildet sind.

5. Vorrichtung nach Anspruch 4,
**dadurch gekennzeichnet, dass**
der optoelektronische Sensor ein Infrarotsensor ist.

6. Vorrichtung nach einem der vorstehenden Ansprüche,
**dadurch gekennzeichnet, dass**
das Schreibgerät (30, 100) eine Prozessoreinrichtung und/oder eine Einrichtung zur Speicherung des Datensatzes umfasst.

7. Vorrichtung nach einem der vorstehenden Ansprüche,
**dadurch gekennzeichnet, dass**
sie eine Sendeeinrichtung (50) und/oder eine Empfangseinrichtung (70) umfasst.

8. Vorrichtung nach einem der vorstehenden Ansprüche,
**dadurch gekennzeichnet, dass**
die Vorrichtung die Neigung des Schreibgerätes (30, 100) während des Schreibvorgangs und/oder die Geschwindigkeit, mit der das Schreibgerät (30, 100) über die Schreibunterlage (10) bewegt wird, und/oder die Beschleunigung des Schreibgerätes (30, 100) über der Schreibunterlage (10) und/oder den Druck des Schreibgerätes (30, 100) auf die Schreibunterlage (10) während des Schreibvorganges erfasst.

9. Vorrichtung nach einem der vorstehenden Ansprüche,
**dadurch gekennzeichnet, dass**
die Empfangseinrichtung (70) eine Computereinrichtung umfasst oder mit einer Computereinrichtung verbindbar ist und/oder die Computereinrichtung wenigstens eine Datenbank umfasst und ein Vergleich von in der Datenbank gespeicherten Daten mit den aufgezeichneten Daten erfolgt.

10. Vorrichtung nach einem der vorstehenden Ansprüche,
**dadurch gekennzeichnet, dass**
die Computereinrichtung und/oder die
Prozessoreinrichtung des Schreibgerätes (30, 100) eine Software oder fest verdrahtete Logik aufweist, in der ein intelligentes Leseverfahren implementiert ist.

11. Vorrichtung nach einem der vorstehenden Ansprüche,
**dadurch gekennzeichnet, dass**
die Empfangseinrichtung (70) tragbar ist, wie etwa ein elektronisches Notizbuch oder eine Uhr.

12. Vorrichtung nach einem der vorstehenden Ansprüche,
**dadurch gekennzeichnet, dass**
einem Benutzer des Schreibgerätes (30, 100) oder dem Schreibgerät (10, 100) selbst wenigstens eine Identifikationsnummer und/oder wenigstens ein Paßwort zugewiesen ist.

13. Vorrichtung nach einem der vorstehenden Ansprüche,
**dadurch gekennzeichnet, dass**
eine Signalisierungseinrichtung (35) am Schreibgerät (30, 100) angebracht ist, die insbesondere anzeigt, wenn der Empfang von übermittelten Daten nicht fehlerfrei abläuft.

14. Vorrichtung nach einem der vorstehenden Ansprüche,
**dadurch gekennzeichnet, dass**
die Sendeeinrichtung (50) einen Zwischenspeicher umfasst.

15. Vorrichtung nach einem der vorstehenden Ansprüche,
**dadurch gekennzeichnet, dass**
die Schreibunterlage (10) eine Codierung zur Kennzeichnung des Inhaltes der Schreibunterlage (10) umfasst.

16. Vorrichtung nach Anspruch 15,
**dadurch gekennzeichnet, dass**
das Schreibgerät (30, 100) eine Leseeinrichtung zum Aufnehmen der Codierung aufweist.

17. Vorrichtung mit einem Schreibgerät (30, 100), das eine zweidimensionale Abbildung erzeugt und das die zweidimensionale Abbildung in Form.von Signalen aufzeichnet, und mit einer Schreibunterlage (10) welche
**dadurch gekennzeichnet ist, daß** die Schreibunterlage wenigstens ein zu beschreibendes Feld (25, 26) aufweist, wobei die Bestimmung der Position des Schreibgerätes (30, 100) bezüglich der Schreibunterlage (10) über eine Flächencodierung erfolgt.

18. Vorrichtung nach Anspruch 17,
**dadurch gekennzeichnet, dass**
die Schreibunterlage (10) eine magnetische Schicht umfasst.

19. Vorrichtung nach Anspruch 17 oder 18,
**dadurch gekennzeichnet, dass**
die Schreibunterlage (10) linear oder nichtlinear magnetisch gerastert ist.

20. Vorrichtung nach einem der vorstehenden Ansprüche,
**dadurch gekennzeichnet, dass**
das Schreibgerät (30, 100) die zweidimensionale Abbildung mit Kugelschreiberpaste, einem magnetischem Stoff oder einem optisch detektierbaren Stoff erzeugt.

21. Vorrichtung nach einem der vorstehenden Ansprüche, welche **gekennzeichnet ist durch** eine Schreibunterlage (10) zur Aufnahme von Information, insbesondere geschriebenem Text und/oder einer Zeichnung, wobei die Schreibunterlage (10) eine Kennung aufweist.

22. Vorrichtung nach Anspruch 21, **dadurch gekennzeichnet, daß** die Kennung der Schreibunterlage (10) als zweidimensionale Flächencodierung ausgebildet ist.

23. Vorrichtung nach Anspruch 21 oder 22, **dadurch gekennzeichnet, daß**
die Schreibunterlage (10) eine magnetische Schicht umfasst.

24. Vorrichtung nach Anspruch 23, **dadurch gekennzeichnet, daß** die Schreibunterlage (10) linear oder nichtlinear magnetisch gerastert ist.

25. Vorrichtung nach Anspruch 21 oder 22, **dadurch gekennzeichnet, daß**
die Kennung als barcodeähnliches System ausgebildet ist.

26. Vorrichtung nach Anspruch 25, **dadurch gekennzeichnet, daß** die Schreibunterlage (10) als beschreib- oder bedruckbares Papier ausgebildet ist.

27. Vorrichtung nach einem der Ansprüche 21 bis 26, **dadurch gekennzeichnet, daß**
die Schreibunterlage (10) eine Codierung zur Kennzeichnung des Inhaltes der Schreibunterlage (10) umfasst.

28. Verfahren zum Aufzeichnen eines Datensatzes, welcher zumindest einer mit einem Schreibgerät (30, 100) auf eine Schreibunterlage (10) aufgetragenen Information entsprechende Daten, und der Information zugehörige Position auf der Schreibunterlage (10) und eine weitere der Schreibunterlage (10) zugeordnete Kennung enthält, wobei das Aufzeichnen durch die Erzeugung der Information aktiviert wird und die Bestimmung der Position des Schreibgerätes (30, 100) bezüglich der Schreibunterlage (10) über eine Flächencodierung erfolgt.

29. Verfahren nach Anspruch 28, **dadurch gekennzeichnet, dass** die Position des Schreibgerätes (30, 100) aus der Bewegung des Schreibgerätes (10, 100) während des Aufbringens der Information auf die Schreibunterlage (10) bestimmt und in vorgebbaren Zeitabständen über eine absolute Positionsbestimmung bzgl. der Schreibunterlage (10) korrigiert wird.

30. Verfahren nach Anspruch 28 oder 29, **dadurch gekennzeichnet, dass** die Bestimmung der relativen Positionen in kürzeren Zeitabständen als die Bestimmung der absoluten Positionen erfolgt und dass die relativen Positionen aus dem dreidimensionalen Bewegungsverlauf des Schreibgerätes (30, 100) bestimmt werden und die absoluten Positionen über eine Markierung auf der Schreibunterlage (10) und eine dazugehörige Ausleseeinheit im Schreibgerät (30, 100) bestimmt werden.

31. Verfahren nach einem der Ansprüche 28 bis 30,
**dadurch gekennzeichnet, dass**
die Beschleunigung des Schreibgerätes (30, 100)mit drei Beschleunigungssensoren (101a - 101c), welche drei zueinander orthogonalen Raumrichtungen zugeordnet sind, bestimmt wird und eine Neigung des Schreibgerätes mit einem zweidimensional arbeitenden Neigungssensor (102) und eine Drehung des Schreibgerätes um seine Längsachse mit einem Gyroskop (103) bestimmt wird und
dass die relative Position des Schreibgerätes (30, 100) aus einer zweifachen Integration nach der Zeit der Beschleunigung unter Berücksichtigung der Neigung und der Drehung ermittelt wird und
dass zur absoluten Positionsbestimmung ein gleichmäßig auf der Schreibunterlage (10) angebrachtes barcodeähnliches System mit Ortsangaben in zwei zueinander orthogonalen Richtungen und ein zugehöriger optoelektronischer Sensor im Schreibgerät (30, 100) verwendet wird.

## Claims

1. Apparatus comprising a writing instrument (30, 100) and a writing support (10) for recording a set of data, comprising data corresponding to information, particularly written text and/or a drawing, recorded on the writing support (10) by the writing instrument (30, 100), and another identification associated with the writing support (10) and positions on the writing support (10) associated with the information, the recording being adapted to be activated by the generation of the information, **characterised in that** the determination of the position of the writing instrument with respect to the writing support is effected by way of a surface coding.

2. Apparatus according to claim 1, **characterised in that** the apparatus comprises first means (101a - 101c, 102, 103) for the continuous determination of the position of the writing instrument (30, 100) on the writing support (10) relatively to a start position for the application of the information and second means (20, 25, 26) for the continuous absolute determination of the position of the writing instrument (30, 100) on the writing support (10).

3. Apparatus according to claim 2, **characterised in that** the determination of the relative positions is effected at shorter intervals of time than the determination of the absolute positions and **in that** the first means (101a - 101c, 102, 103) determine the relative positions from the three-dimensional movement configuration of the writing instrument (30, 100) and the second means (20, 25, 26) are formed as a marking on the writing support (10) and an associated read-out unit in the writing instrument (30, 100), wherein, in the presence of absolute positions, the relative positions are balanced therewith.

4. Apparatus according to any one of claims 1 to 3, **characterised in that** the first means comprise three acceleration sensors (101a - 101c), with which there are associated three spatial directions orthogonal to one another, a two-dimensionally operating inclination sensor (102) and at least one gyroscope (103) and **in that** the second means (20, 25, 26) are constructed as a system similar to a bar code applied uniformly to the writing support (10) with location indications in two directions orthogonal to one another and an associated opto-electronic sensor in the writing instrument (30, 100).

5. Apparatus according to claim 4, **characterised in that** the opto-electronic sensor is an infrared sensor.

6. Apparatus according to any one of the preceding claims, **characterised in that** the writing instrument (30, 100) comprises a processor device and/or a device for storing the set of data.

7. Apparatus according to any one of the preceding claims, **characterised in that** it comprises a transmission device (50) and/or a reception device (70) .

8. Apparatus according to any one of the preceding claims, **characterised in that** the apparatus detects the inclination of the writing instrument (30, 100) during the writing operation and/or the speed at which the writing instrument (30, 100) is moved over the writing support (10), and/or the acceleration of the writing instrument (30, 100) over the writing support (10) and/or the pressure of the writing instrument (30, 100) on the writing support (10) during the writing operation.

9. Apparatus according to any one of the preceding claims, **characterised in that** the receiving device (70) comprises a computer device or is adapted to be connected to a computer device and/or the computer device comprises at least one database and the data stored in the database is compared with the recorded data.

10. Apparatus according to any one of the preceding claims, **characterised in that** the computer device and/or the processor device of the writing instrument (30, 100) comprises a software or permanently connected logic in which an intelligent reading process is implemented.

11. Apparatus according to any one of the preceding claims, **characterised in that** the receiving device (70) is portable, after the style of an electronic notebook or watch.

12. Apparatus according to any one of the preceding claims, **characterised in that** a user of the writing instrument (30, 100) or the writing instrument (10, 100) itself is allocated at least one identification number and/or at least one password.

13. Apparatus according to any one of the preceding claims, **characterised in that** a signalling device (35) is mounted on the writing instrument (30, 100) and indicates in particular any error in the reception of transmitted data.

14. Apparatus according to any one of the preceding claims, **characterised in that** the transmission device (50) comprises a buffer memory.

15. Apparatus according to any one of the preceding claims, **characterised in that** the writing support (10) comprises a coding to identify the content of the writing support (10).

16. Apparatus according to claim 15, **characterised in that** the writing instrument (30, 100) comprises a reading device to receive the coding.

17. Apparatus comprising a writing instrument (30, 100) producing a two-dimensional image and recording the two-dimensional image in the form of signals, and comprising a writing support (10) which is **characterised in that** the writing support comprises at least one field (25, 26) for the application of writing, the position of the writing instrument (30, 100) with respect to the writing support (10) being determined by means of a surface coding.

18. Apparatus according to claim 17, **characterised in that** the writing support (10) comprises a magnetic coating.

19. Apparatus according to claim 17 or 18, **characterised in that** the writing support (10) has a linear or non-linear magnetic raster.

20. Apparatus according to any one of the preceding claims, **characterised in that** the writing instrument (30, 100) generates the two-dimensional image by means of ball-point pen ink, a magnetic substance, or an optically detectable substance.

21. Apparatus according to any one of the preceding claims, **characterised by** a writing support (10) to receive information, particularly written text, and/or a drawing, the writing support (10) having an identification.

22. Apparatus according to claim 21, **characterised in that** the identification of the writing support (10) is constructed in the form of a two-dimensional surface coding.

23. Apparatus according to claim 21 or 22, **characterised in that** the writing support (10) comprises a magnetic coating.

24. Apparatus according to claim 23, **characterised in that** the writing support (10) has a linear or non-linear magnetic raster.

25. Apparatus according to claim 21 or 22, **characterised in that** the identification is constructed as a system similar to a bar code.

26. Apparatus according to claim 25, **characterised in that** the writing support (10) is constructed as a paper which can be written or printed on.

27. Apparatus according to any one of claims 21 to 26, **characterised in that** the writing support (10) comprises a coding to identify the content of the writing support (10).

28. A method of recording a set of data, comprising at least data corresponding to information applied to a writing support (10) by a writing instrument (30, 100), and containing another identification associated with the writing support (10) and positions on the writing support (10) associated with the information wherein the recording is adapted to be activated by the generation of the information and the determination of the position of the writing instrument (30, 100) with respect to the writing support (10) is effected by way of a surface coding.

29. A method according to claim 28, **characterised in that** the position of the writing instrument (30, 100) is determined from the movement of the writing instrument (10, 100) during application of the information to the writing support (10) and is corrected at predeterminable intervals of time by means of an absolute position determination with respect to the writing support (10).

30. A method according to claim 28 or 29, **characterised in that** the determination of the relative positions is effected at shorter intervals of time than the determination of the absolute positions and **in that** the relative positions are determined from the three-dimensional movement configuration of the writing instrument (30, 100) and the absolute positions are determined by means of a marking on the writing support (10) and an associated read-out unit in the writing instrument (30, 100).

31. A method according to any one of claims 28 to 30, **characterised in that** the acceleration of the writing instrument (30, 100) is determined by means of three acceleration sensors (101a - 101c), which are associated with three spatial directions orthogonal to one another, and an inclination of the writing instrument is determined by means of a two-dimensionally operating inclination sensor (102) and a rotation of the writing instrument about its longitudinal axis by means of a gyroscope (103) and **in that** the relative position of the writing instrument (30, 100) is determined from a double integration in time of the acceleration taking into account the inclination and the rotation and **in that** the absolute position determination is effected by the use of a system similar to a bar code applied uniformly to the writing support. (10) and having location indications in two directions orthogonal to one another and an associated opto-electronic sensor in the writing instrument (30, 100).

## Revendications

1. Dispositif avec un instrument d'enregistrement (30, 100) et un support d'enregistrement (10) pour enregistrer une série de données, laquelle comprend les données correspondant à une information tracée au moyen de l'instrument d'enregistrement (30, 100) sur le support d'enregistrement (10), en particulier un texte écrit et/ou un dessin, ainsi que les positions se rapportant à l'information sur le support d'enregistrement (10) et un code supplémentaire associé au support d'enregistrement (10), dans lequel l'enregistrement peut être activé par la production de l'information, laquelle est **caractérisée en ce que** la détermination de la position de l'instrument d'enregistrement par rapport au support d'enregistrement intervient via un codage de la surface.

2. Dispositif selon la revendication 1, **caractérisé en ce que** ledit dispositif comporte des premiers moyens (101a - 101c, 102, 103), afin de déterminer en continu la position de l'instrument d'enregistrement (30, 100) sur le support d'enregistrement (10) relativement à une position de départ pour le tracé de l'information, et des seconds moyens (20, 25, 26), pour déterminer en continu la position absolue de l'instrument d'enregistrement (30, 100) sur le support d'enregistrement (10).

3. Dispositif selon la revendication 2, **caractérisé en ce que** la détermination des positions relatives s'effectue à des intervalles de temps plus brefs que la détermination des positions absolues et **en ce que** les premiers moyens (101a - 101c, 102, 103) déterminent les positions relatives à partir du déroulement tridimensionnel du mouvement de l'instrument d'enregistrement (30, 100) et les seconds moyens (20, 25, 26) se composent d'un système de repérage sur le support d'enregistrement (10) et d'une unité de lecture correspondante intégrée à l'instrument d'enregistrement (30, 100), dans lequel les positions relatives se trouvent alors ajustées par la présentation de positions absolues.

4. Dispositif selon l'une des revendications 1 à 3, **caractérisé en ce que** les premiers moyens comportent trois capteurs d'accélération (101a - 101c), lesquels sont associés à trois directions spatiales orthogonales l'une par rapport à l'autre, un capteur d'inclinaison (102) travaillant de manière bidimensionnelle et au moins un gyroscope (103), et **en ce que** les seconds moyens (20, 25, 26) se composent d'un système équivalent au code à barres, uniformément réparti sur le support d'enregistrement (10), avec indication des coordonnées spatiales couvrant deux directions orthogonales l'une par rapport à l'autre, et un capteur optoélectronique correspondant qui est intégré à l'instrument d'enregistrement (30, 100).

5. Dispositif selon la revendication 4, **caractérisé en ce que** le capteur optoélectronique est un capteur infrarouge.

6. Dispositif selon l'une quelconque des revendications précédentes, **caractérisé en ce que** l'instrument d'enregistrement (30, 100) comprend une unité équipée d'un processeur et/ou une unité pour stocker la série de données.

7. Dispositif selon l'une quelconque des revendications précédentes, **caractérisé en ce qu'**il comprend une unité émettrice (50) et/ou une unité réceptrice (70).

8. Dispositif selon l'une quelconque des revendications précédentes, **caractérisé en ce qu'**il saisit l'inclinaison de l'instrument d'enregistrement (30, 100) pendant le processus d'écriture et/ou la vitesse à laquelle l'instrument d'enregistrement (30, 100) se déplace sur le support d'enregistrement (10) et/ou l'accélération de l'instrument d'enregistrement (30, 100) sur le support d'enregistrement (10) et/ou la pression de l'instrument d'enregistrement (30, 100) sur le support d'enregistrement (10) pendant le processus d'écriture.

9. Dispositif selon l'une quelconque des revendications précédentes, **caractérisé en ce que** l'unité réceptrice (70) comprend une unité informatique ou est raccordable à une unité informatique et/ou l'unité informatique comprend au moins une base de données et **en ce qu'**il donne lieu à une comparaison des données stockées dans la base de données avec les données enregistrées.

10. Dispositif selon l'une quelconque des revendications précédentes, **caractérisé en ce que** l'unité informatique et/ou l'unité équipée d'un processeur de l'instrument d'enregistrement (30, 100) présente un logiciel ou une logique câblée, dans laquelle est mis en oeuvre un procédé de lecture intelligent.

11. Dispositif selon l'une quelconque des revendications précédentes, **caractérisé en ce que** l'unité réceptrice (70) est portative, comme, par exemple, un bloc-notes électronique ou une montre.

12. Dispositif selon l'une quelconque des revendications précédentes, **caractérisé en ce qu'**un utilisateur de l'instrument d'enregistrement (30, 100) ou l'instrument d'enregistrement (10, 100) même se voient au moins attribuer un numéro d'identification et/ou un mot de passe.

13. Dispositif selon l'une quelconque des revendications précédentes, **caractérisé en ce que** l'instrument d'enregistrement (30, 100) dispose d'une unité de signalisation (35) qui indique, en particulier, si la réception des données transmises se déroule sans erreur.

14. Dispositif selon l'une quelconque des revendications précédentes, **caractérisé en ce que** l'unité émettrice (50) comprend une mémoire tampon.

15. Dispositif selon l'une quelconque des revendications précédentes, **caractérisé en ce que** le support d'enregistrement (10) comprend un codage pour l'identification du contenu du support d'enregistrement (10).

16. Dispositif selon la revendication 15, **caractérisé en ce que** l'instrument d'enregistrement (30, 100) présente une unité de lecture destinée à la réception du codage.

17. Dispositif équipé d'un instrument d'enregistrement (30, 100), lequel produit une imagerie bidimensionnelle et enregistre ladite imagerie bidimensionnelle sous forme de signaux, et d'un support d'enregistrement (10), lequel est **caractérisé en ce que** ledit support d'enregistrement présente au moins un champ d'écriture (25, 26), dans lequel la détermination de la position de l'instrument d'enregistrement (30, 100) par rapport au support d'enregistrement (10) s'effectue via un codage de la surface.

18. Dispositif selon la revendication 17, **caractérisé en ce que** le support d'enregistrement (10) comporte une couche magnétique.

19. Dispositif selon la revendication 17 ou 18, **caractérisé en ce que** le support d'enregistrement (10) comporte une trame magnétique linéaire ou non linéaire.

20. Dispositif selon l'une quelconque des revendications précédentes, **caractérisé en ce que** l'instrument d'enregistrement (30, 100) produit l'imagerie bidimensionnelle au moyen de l'encre d'un stylo à bille, d'une substance magnétique ou d'une substance détectable par voie optique.

21. Dispositif selon l'une quelconque des revendications précédentes, **caractérisé en ce qu'**il comporte un support d'enregistrement (10) destiné à réceptionner une information, un texte écrit et/ou un dessin en particulier, dans lequel le support d'enregistrement (10) dispose d'un code.

22. Dispositif selon la revendication 21, **caractérisé en ce que** le code du support d'enregistrement (10) se présente sous la forme d'un codage bidimensionnel de la surface.

23. Dispositif selon la revendication 21 ou 22, **caractérisé en ce que** le support d'enregistrement (10) comporte une couche magnétique.

24. Dispositif selon la revendication 23, **caractérisé en ce que** le support d'enregistrement (10) comporte une trame magnétique linéaire ou non linéaire.

25. Dispositif selon la revendication 21 ou 22, **caractérisé en ce que** le code se présente sous la forme d'un système équivalent au code à barres.

26. Dispositif selon la revendication 25, **caractérisé en ce que** le support d'enregistrement (10) se présente sous la forme de papier sur lequel on peut écrire ou qui peut être imprimé.

27. Dispositif selon l'une des revendications 21 à 26, **caractérisé en ce que** le support d'enregistrement (10) comprend un codage pour l'identification du contenu du support d'enregistrement (10).

28. Procédé pour enregistrer une série de données, laquelle comprend au moins les données correspondant à une information tracée au moyen de l'instrument d'enregistrement (30, 100) sur le support d'enregistrement (10) et la position se rapportant à l'information sur le support d'enregistrement (10) et un code supplémentaire associé au support d'enregistrement (10), dans lequel l'enregistrement peut être activé par la production de l'information et dans lequel la détermination de la position de l'instrument d'enregistrement (30, 100) par rapport au support d'enregistrement (10) intervient via un codage de la surface.

29. Procédé selon la revendication 28, **caractérisé en ce que** la position de l'instrument d'enregistrement (30, 100) est déterminée à partir du mouvement qu'effectue l'instrument d'enregistrement (10, 100) pendant l'application de l'information sur le support d'enregistrement (10) et **en ce qu'**elle est corrigée à intervalles de temps pouvant être prédéterminés grâce à une détermination absolue de la position par rapport au support d'enregistrement (10).

30. Procédé selon la revendication 28 ou 29, **caractérisé en ce que** la détermination des positions relatives s'effectue à des intervalles de temps plus brefs que la détermination des positions absolues et **en ce que** les positions relatives sont déterminées à partir du déroulement tridimensionnel du mouvement de l'instrument d'enregistrement (30, 100), et les positions absolues sont déterminées grâce à un système de repérage sur le support d'enregistrement (10) et à l'aide d'une unité de lecture correspondante qui est intégrée à l'instrument d'enregistrement (30, 100).

31. Procédé selon l'une des revendications 28 à 30, **caractérisé en ce que**
l'accélération de l'instrument d'enregistrement (30, 100) est déterminée par trois capteurs d'accélération (101a - 101c), lesquels sont associés à trois directions spatiales orthogonales l'une par rapport à l'autre, et **en ce qu'**une inclinaison de l'instrument d'enregistrement est déterminée par un capteur d'inclinaison (102) travaillant de manière bidimensionnelle et qu'une rotation de l'instrument d'enregistrement sur son axe longitudinal est déterminée par un gyroscope (103)
et la position relative de l'instrument d'enregistrement (30, 100) est calculée à partir d'une double intégration en fonction du temps d'accélération, compte tenu de l'inclinaison et de la rotation, et
**en ce que** pour déterminer la position absolue on a recours à un système équivalent au code à barres, uniformément réparti sur le support d'enregistrement (10), avec indication des coordonnées, couvrant deux directions orthogonales l'une par rapport à l'autre et un capteur optoélectronique correspondant qui est intégré à l'instrument d'enregistrement (30, 100).
